# DEMANDE DE BREVET EUROPEEN

(11) **EP 3 451 026 A1**
(43) Date de publication de la demande: **06.03.2019**
(21) Numéro de dépôt: 18188898.3
(22) Date de dépôt: 14.08.2018
(51) Int. Cl.: G01V 8/10, B65D 90/48, G01S 17/02

(54) **DISPOSITIF ET PROCÉDÉ DE DÉTERMINATION DE LA PRÉSENCE OU DE L'ABSENCE ET ÉVENTUELLEMENT DU DÉPLACEMENT D'UN OBJET CONTENU DANS UN LOGEMENT**

(30) Priorité: 28.08.2017 FR 1757921
(71) Demandeur: STMicroelectronics (Rousset) SAS, 13790 Rousset (FR)
(72) Inventeur: CALENZO, Patrick, 13124 PEYPIN (FR); COQUEL, Sylvain, 13800 ISTRES (FR); TERRIER, Julien, 83640 SAINT ZACHARIE (FR); WELTER, Loic, 13790 CHATEAUNEUF LE ROUGE (FR)
(74) Mandataire: Casalonga

(57) **Abrégé**

Procédé de détection de la présence ou de l'absence d'au moins un objet (9) dans un logement (8) comprenant :
a) une première étape durant laquelle un capteur (6) du type temps de vol mesure une première scène tridimensionnelle (S0) à l'intérieur du logement (8) dépourvu d'objet ;
b) une deuxième étape durant laquelle le capteur (6) du type temps de vol mesure une deuxième scène (S1) à l'intérieur du logement (8) ;
c) une étape de comparaison durant laquelle on compare ladite première scène (S0) à la deuxième scène (S1); et
d) une étape de détermination de la présence ou de l'absence de l'objet (9) dans ledit logement (8), à partir du résultat de ladite comparaison.

## Description

Des modes de réalisation et de mise en oeuvre de l'invention concernent la détection de la présence d'un ou de plusieurs objets dans un espace.

Certaines situations nécessitent de déterminer si un objet de forme, de couleur et de constitution quelconque est présent dans un logement et/ou a été ajouté ou retiré dudit logement, par exemple un dispositif de livraison d'objets stockant les objets à livrer dans un casier, et dont le destinataire vient retirer les objets du casier. Il est nécessaire de déterminer d'une part, si l'ensemble des objets contenus dans le casier ont été retirés ou seulement une partie des objets, et, d'autre part, si le destinataire a rajouté un objet dans le casier.

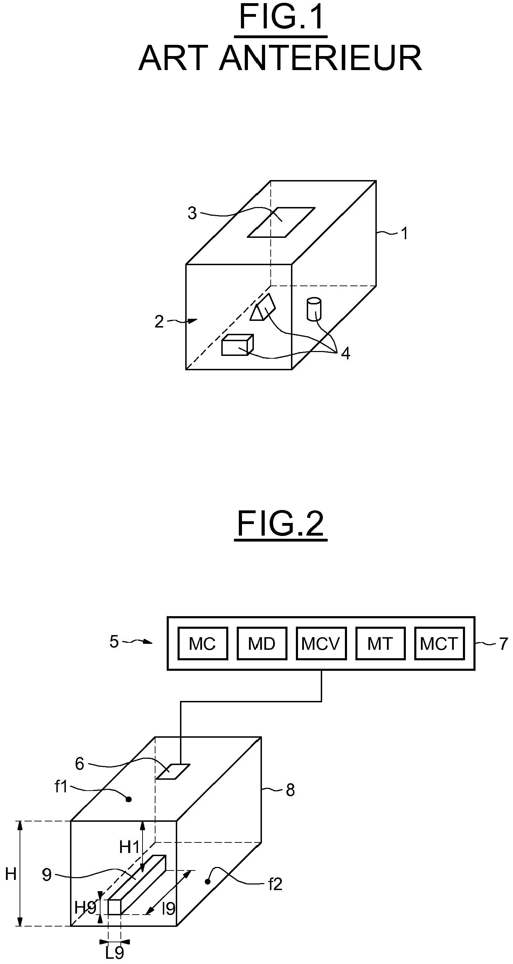

La figure 1 illustre un exemple d'un tel dispositif de livraison.

Il comprend un casier 1 muni d'une porte 2 comportant une poignée. Le casier 1 comprend un capteur 3 de détection de présence qui détermine si des objets 4 de forme, de couleur et constitués de matériaux différents sont contenus dans le casier 1.

Le capteur 3 de détection de présence connu de l'état de la technique est par exemple un dispositif de détection infrarouge, un dispositif de détection à ultrasons, un dispositif de détection inductif ou capacitif, un dispositif de radio identification connu sous l'acronyme anglo-saxon RFID (« Radio Frequency Identification » en anglais) ou un dispositif de détection visuel comportant une caméra.

Cependant l'efficacité des dispositifs de détection de présence connus de l'état de la technique dépend pour certains dispositifs de la couleur des objets à détecter, pour d'autres dispositifs des matériaux constituant les objets. De plus certains dispositifs connus de l'état de la technique ne permettent pas de déterminer si un objet été déplacé dans un logement, ni le taux d'occupation par les objets du logement surveillé. Ces limitations sont bien connues de l'homme du métier.

Les dispositifs de détection RFID nécessitent que chaque objet soit équipé d'une puce RFID, et les dispositifs de détections visuels mettent en oeuvre de coûteuses caméras et de complexes algorithmes de reconnaissance visuel d'objets. Ces deux types de dispositif de détection ont une consommation d'énergie importante et requièrent un investissement financier important.

Il existe par conséquent un besoin de réaliser un dispositif de détection de présence dans un logement donné d'un ou plusieurs objets de forme, de couleur et constitué de matériaux quelconques permettant de déterminer le taux d'occupation dudit logement en maîtrisant la consommation énergétique du dispositif et dont sa mise en oeuvre est aisée.

Il existe également un besoin de déterminer si un objet est déplacé dans le logement surveillé.

Selon des modes de mise en oeuvre et de réalisation, il est avantageusement proposé d'utiliser des capteurs de temps de vol (« Time of Flight » en langue anglaise) mesurant des scènes tridimensionnelles contenus dans un logement pour déterminer par comparaison desdites scènes la présence d'au moins un objet contenu dans ledit logement.

Selon un aspect, il est proposé un procédé de détection de la présence ou de l'absence d'au moins un objet dans un logement comprenant :
a) une première étape durant laquelle un capteur de type de temps de vol mesure une première scène tridimensionnelle à l'intérieur du logement dépourvu d'objet ;
b) une deuxième étape durant laquelle le capteur de type temps de vol mesure une deuxième scène à l'intérieur du logement ;
c) une étape de comparaison durant laquelle on compare ladite première scène à la deuxième scène; et
d) une étape de détermination de la présence ou de l'absence de l'objet dans ledit logement, à partir du résultat de ladite comparaison.

Une scène tridimensionnelle est par exemple une représentation tridimensionnelle de l'intérieur du logement obtenue par exemple par un maillage de distance.

Avantageusement, la mise en oeuvre du procédé ne nécessite pas une étape d'étalonnage antérieure à la détection de la présence éventuelle de l'objet dans le logement.

Avantageusement, le procédé peut comporter une répétition de la deuxième étape à un intervalle régulier.

Le dispositif fonctionne par intermittence, ce qui permet de réduire sa consommation électrique.

Selon un mode de mise en oeuvre, postérieurement à une détection de la présence dudit objet, on effectue une deuxième comparaison entre deux deuxièmes étapes successives et on détermine un retrait éventuel de l'objet à partir de la deuxième comparaison.

Selon un autre mode de mise en oeuvre, le procédé comporte en outre un calcul du volume occupé par ledit objet dans ledit logement.

Avantageusement, le procédé comporte en outre un calcul d'un taux d'occupation dudit volume.

Selon encore un autre mode de mise en oeuvre, le procédé comporte une reproduction des étapes a) à d) pour un deuxième capteur du type temps de vol, et une détermination d'un déplacement de l'objet à l'intérieur du logement à partir des deux étapes de détermination d) respectivement associées aux deux capteurs.

Selon un autre aspect, il est proposé un dispositif de détection de la présence ou de l'absence d'au moins un objet dans un logement comprenant :
un capteur de type temps de vol configuré pour mesurer une première scène tridimensionnelle et une deuxième scène du logement postérieurement à la première scène ;
des moyens de comparaison configurés pour comparer les deux scènes ; et
des moyens de détermination configurés pour déterminer la présence ou l'absence de l'objet dans ledit logement à partir du résultat de la comparaison.

Avantageusement, le dispositif peut comporter en outre des moyens de temporisation configurés pour faire répéter la mesure d'une scène par ledit capteur à intervalle régulier.

Selon un autre mode de réalisation, le dispositif comporte en outre des premiers moyens de calcul configurés pour calculer le volume occupé par ledit objet dans ledit logement.

De préférence, le dispositif comporte des deuxièmes moyens de calcul configurés pour calculer un taux d'occupation dudit logement.

Selon encore un autre mode de réalisation, le dispositif comprend en outre un deuxième capteur de type temps de vol configuré pour mesurer une scène tridimensionnelle, les moyens de détermination étant configurés pour déterminer deux informations de présence de l'objet à partir de scènes tridimensionnelles respectivement mesurées par les deux capteurs, et des moyens configurés pour déterminer un déplacement de l'objet à l'intérieur du logement à partir des deux informations de présence respectivement associées aux deux capteurs.

D'autres avantages et caractéristiques de l'invention apparaîtront à l'examen de la description détaillée de modes de réalisation, nullement limitatifs, et des dessins annexés sur lesquels :
- la figure 1, précédemment décrite, illustre un mode de réalisation d'un dispositif de détection de présence d'objets dans un volume défini selon l'état de la technique ; et
- les figures 2 à 6 illustrent différents modes de réalisation et de mise en oeuvre de l'invention.

On se réfère à la figure 2 qui représente un exemple de mode de réalisation d'un dispositif 5 de détection de présence d'au moins un objet 9 de hauteur uniforme H9 et de largeur uniforme L9 dans un logement de forme cubique 8 de contenance connue.

Par objet on entend ici une chose solide.

Bien entendu l'invention ne se limite pas à un logement de forme cubique et un objet de hauteur uniforme et de largeur uniforme, on pourrait avoir un logement de forme quelconque contenant un ou plusieurs objets de hauteur variable et/ou de largeur variable.

Le dispositif 5 de détection de la présence ou de l'absence d'au moins un objet comprend un capteur 6 du type temps de vol configuré pour mesurer une scène tridimensionnelle à l'intérieur du logement 8 connu sous l'acronyme anglo-saxon TOF (« Time of Flight », en anglais), une unité de traitement 7, des moyens de comparaison MC configurés pour comparer deux scènes tridimensionnelles, des moyens MD de détermination configurés pour déterminer la présence ou de l'absence de l'objet 9 dans ledit logement 8 à partir du résultat de la comparaison, des premiers moyens de calcul MCV configurés pour calculer le volume occupé par un objet dans ledit logement 8, des moyens de temporisation MT configurés pour faire répéter la mesure d'une scène tridimensionnelle par ledit capteur 6 à intervalle régulier, des deuxièmes moyens de calcul MCT configurés pour calculer le taux d'occupation T dudit logement 8.

L'unité de traitement 7 est réalisée par exemple à partir d'un microprocesseur, mais il peut s'agir de tout dispositif apte à traiter les données fournies par le capteur 6. Il peut notamment s'agir d'un micro contrôleur.

Les moyens MC, MD, MCV, MT et MCT peuvent être réalisés par exemple sous forme logicielle au sein d'un microprocesseur, mais il peut s'agir de tout dispositif respectivement apte à comparer deux scènes tridimensionnelles, configuré pour déterminer la présence ou l'absence d'un objet dans un logement à partir du résultat de la comparaison, apte à calculer le volume occupé par un objet dans le logement 8, apte à faire répéter la mesure d'une scène tridimensionnelle par le capteur 6 à intervalle régulier, apte à calculer le taux d'occupation T du logement.

Il peut notamment s'agir d'un microcontrôleur ou d'une partie de l'unité de traitement 7 comme représenté ici.

Le capteur 6 du type temps de vol donne une représentation tridimensionnelle d'une scène obtenue à partir d'un maillage de distances.

Pour chaque zone du maillage, le capteur de temps de vol TOF mesure une distance le séparant d'un objet par mesure d'un laps de temps Δt écoulé entre une émission d'un signal du type onde électromagnétique, tel qu'un signal laser, et la réception de ce signal après réflexion sur un objet présent dans le champ de vision du capteur TOF.

Le capteur 6 est disposé sur une première face f1 du logement 8 opposée à une deuxième face f2 du logement 8 sur laquelle repose l'objet 9, de sorte que le capteur 6 visualise la face f2. Les deux faces f1 et f2 sont séparées l'une de l'autre par une distance H.

Le capteur 6 établit en temps réel une scène tridimensionnelle de l'intérieur du logement 8, notamment de l'objet 9 reposant sur la face f2.

La distance H9 sépare la face f2 et une première extrémité de l'objet 9 opposée à la face f2, et une distance H1 sépare la face f1 de la seconde extrémité de l'objet 9 de telle sorte que la distance H est égale à la somme des distances H1 et H9.

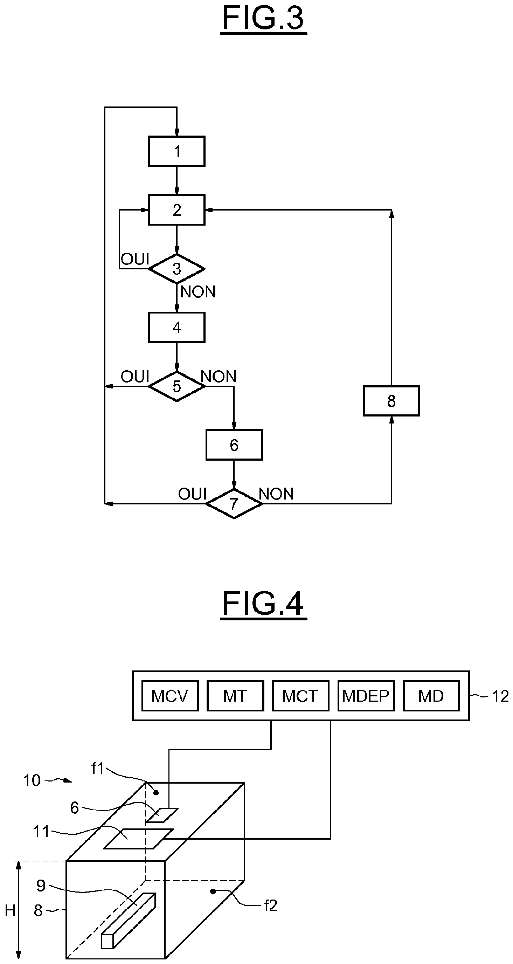

La figure 3 illustre un exemple de mise en oeuvre d'un procédé de détection de la présence ou de l'absence d'au moins un objet 9 dans le logement 8 mettant en oeuvre le dispositif 5. Il est mis en oeuvre par l'unité de traitement 7 incorporant les moyens MC, MD, MCV, MT, et MCT.

Pour améliorer la clarté et la compréhension de l'exemple de mise en oeuvre du procédé, le logement 8 comprend un seul objet 9.

Dans une première étape 1, le logement 8 ne contient aucun objet, c'est-à-dire le logement 8 est vide. Le capteur 6 mesure une première scène tridimensionnelle S0 comportant la face f2. Comme le logement 8 est cubique et les deux faces f1 et f2 sont séparées l'une de l'autre par la distance H, le premier capteur 6 mesure une distance de référence H0 de valeur égale à la valeur H pour l'ensemble de la première scène S0. Les premiers moyens de calcul MCV déterminent la valeur V0 du logement 8 vide à partir de la scène S0 selon un procédé connu de l'homme du métier.

En d'autres termes, le capteur 6 de temps de vol mesure une première scène tridimensionnelle S0 à l'intérieur du logement 8 dépourvu d'objet.

Dans une deuxième étape 2, le capteur 6 du type temps de vol mesure une deuxième scène S1 à l'intérieur du logement 8.

A l'étape 3, les moyens de comparaison MC comparent chaque mesure de distance de la deuxième scène tridimensionnelle S1 aux mesures de distance de la première scène S0, puis déterminent la présence ou l'absence de l'objet 9 dans le logement 8.

Il s'agit d'une étape de comparaison durant laquelle on compare ladite première scène S0 à la deuxième scène S1 suivie d'une étape de détermination de la présence ou de l'absence de l'objet 9 dans ledit logement 8, à partir du résultat de ladite comparaison.

Tant que le logement 8 est vide, les valeurs de distances de la première scène S0 et de la deuxième scène S1 sont égales. Les moyens MD déterminent à partir des résultats des comparaisons fournis par les moyens MC si le logement 8 est vide.

Si toutes les valeurs des scènes S0 et S1 sont égales, c'est-à-dire si les moyens MC n'ont déterminé aucune différence entre au moins une valeur de la scène S0 et la valeur correspondante de la scène S1, les moyens MD déterminent que le logement 8 est vide.

Si au moins une valeur de la scène S0 et la valeur correspondante de la scène S1 sont différentes, les moyens MC déterminent une différence entre les scènes S0 et S1, puis les moyens MD déterminent que le logement 8 n'est pas vide et contient au moins un objet.

Si le logement 8 ne contient aucun objet, on remonte à l'étape 2.

Après une durée t fixée par les moyens MT, par exemple 300 secondes, une nouvelle scène tridimensionnelle est mesurée par le capteur 6 jusqu'à ce que la présence d'un objet dans le logement 8 soit détectée. En d'autres termes, on répète la deuxième étape à un intervalle régulier.

Si le logement 8 contient un objet (par exemple l'objet 9 a été introduit dans le logement 8) la valeur des distances mesurées entre l'objet 9 et la face 1 de la deuxième scène S1 situées au-dessus de la surface définie par la projection de l'objet 9 sur la surface f2, en l'espèce un rectangle délimité par les distances L19 et 119, est égale à H1. Les moyens MC déterminent que la valeur H1 est différente de la valeur H0. Les moyens MD déduisent de la différence des valeurs mesurées par le capteur 6 que l'objet 9 a été introduit dans le logement 8.

Si un objet a été détecté dans le logement 8, on passe à l'étape 4. Une troisième scène tridimensionnelle S2 est relevée après que la durée t s'est écoulée à compter de la fin de l'étape 3.

A l'étape 5, on compare les valeurs de distances des première et troisième scènes S0 et S2. Si les moyens MC déterminent que les valeurs des scènes S0 et S2 sont égales, les moyens MD en déduisent que l'objet 9 a été retiré et on remonte à l'étape 1.

On effectue une deuxième comparaison entre deux deuxièmes étapes successives et on détermine un retrait éventuel de l'objet à partir de la deuxième comparaison.

Si au moins une valeur de la première scène S0 et la valeur correspondante de la troisième scène S2 sont différentes, comme expliqué précédemment, les moyens MD déduisent qu'au moins un objet est présent dans le logement 8. En d'autres termes l'objet 9 est toujours dans le logement 8 ou l'objet 9 a été retiré et un autre objet a été introduit dans le logement 8 ou des objets ont été rajoutés dans le logement 8.

A l'étape 6, le capteur 6 relève une quatrième scène tridimensionnelle S3 après une durée t à compter de la fin de l'étape 5.

Comme décrit à l'étape 5, les moyens MC comparent à l'étape suivante 7 la première scène S0 à la quatrième scène S3.

Si les moyens MD déduisent que le logement 8 est vide, on remonte à l'étape 1.

Si les moyens MD détectent la présence d'au moins un objet dans le logement 8, à l'étape 8, le capteur 6 relève une cinquième scène tridimensionnelle S4. A partir de la scène S4 les premiers moyens de calcul MCV calculent la valeur V1 du logement 8 occupé par au moins un objet présent dans le logement 8.

En d'autres termes on calcule le volume occupé par ledit objet 9 dans ledit logement 8.

Puis les deuxièmes moyens de calcul MCT déterminent le taux T d'occupation en % du logement 8 en divisant le volume V1 par le volume V0 et en multipliant le résultat obtenu par 100.

En d'autres termes, on calcule un taux d'occupation T dudit logement 8, puis on poursuit à l'étape 2.

On se réfère à la figure 4 qui représente un exemple de mode de réalisation d'un dispositif 10 de détection de la présence ou de l'absence et de mouvement d'au moins un objet dans le logement de forme cubique 8.

Le dispositif 10 de détection de présence et de mouvement d'un objet comprend le capteur 6 et un deuxième capteur 11 identique au capteur 6 configuré pour mesurer plusieurs distances de sorte à établir en temps réel une scène tridimensionnelle (i.e. une distance), une unité de traitement 12 et les moyens MCV, MT et MCT décrits précédemment.

L'unité de traitement 12 est réalisée par exemple à partir d'un microprocesseur, mais il peut s'agir de tout dispositif apte à traiter les données fournies par les capteurs 6 et 11. Il peut notamment s'agir d'un microcontrôleur

Les moyens MCV, MT, MCT sont ici incorporés dans l'unité de traitement 12.

L'unité de traitement 12 comporte en outre les moyens de détermination MD configurés pour déterminer deux informations de présence de l'objet à partir de scènes tridimensionnelles respectivement mesurées par les deux capteurs 6 et 11.

En outre, le dispositif 10 comprend des moyens de détermination MDEP configurés pour déterminer un déplacement de l'objet 9 à l'intérieur du logement 8 à partir des deux informations de présence respectivement associées aux deux capteurs 6 et 11.

Les moyens MDEP peuvent être réalisés par exemple sous forme logicielle au sein d'un microprocesseur, mais il peut s'agir de tout dispositif apte à déterminer un mouvement de l'objet à l'intérieur du logement à partir des résultats fournis par les deux capteurs. Il peut notamment s'agir d'un microcontrôleur ou d'une partie de l'unité de traitement 12 comme représenté ici.

Les moyens MDEP mettent en oeuvre un algorithme de reconnaissance de mouvement connu de l'homme du métier.

Bien que l'exemple de mode de réalisation décrive un logement de forme cubique et un objet de hauteur uniforme et de largeur uniforme, on pourrait avoir un logement de forme quelconque, et un ou plusieurs objets de hauteur variable et/ou de largeur variable.

Les capteurs 6 et 11 sont disposés sur la face f1 de sorte que les capteurs 6 et 11 visualisent la face f2. Le capteur 11 est disposé à un endroit différent du capteur 6.

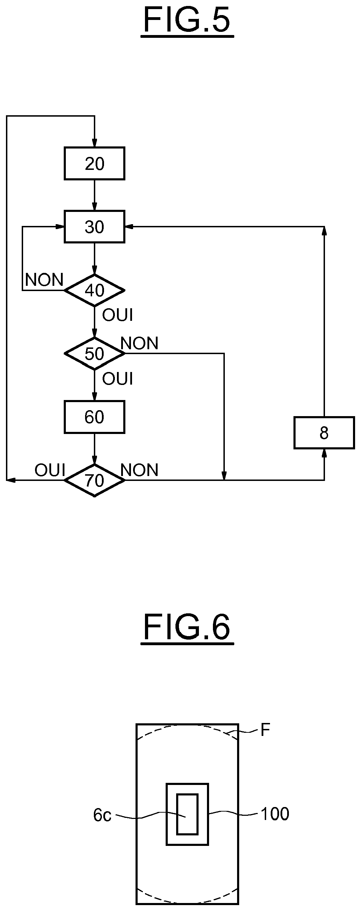

La figure 5 illustre un exemple de mise en oeuvre d'un procédé de détection de la présence d'un l'objet et de mouvement de l'objet dans le logement 8 mettant en oeuvre le dispositif 10.

Pour améliorer la clarté et la compréhension de la mise en oeuvre du procédé, le logement 8 comprend un seul objet 9.

Dans une première étape 20, le logement 8 ne contient aucun objet, c'est-à-dire que le logement 8 est vide. Les capteurs 6 et 11 mesurent chacun une première scène tridimensionnelle respectivement S06 et S011 comportant la face f2. Comme le logement 8 est de forme cubique et les deux faces f1 et f2 sont séparées l'une de l'autre par la distance H, les capteurs 6 et 11 mesurent chacun une distance de référence respectivement H06 et H011 de valeur égale à la valeur H pour l'ensemble des scènes S06 et S011. Les premiers moyens de calcul MCV déterminent la valeur V0 du volume du logement 8 vide à partir de l'une des scènes S06 et S011.

Puis dans une étape 30, les capteurs 6 et 11 mesurent chacun une deuxième scène tridimensionnelle respectivement S16 et S111.

A l'étape 40, l'algorithme de reconnaissance de mouvement mis en oeuvre par les moyens MDEP détermine si un objet a bougé en comparant respectivement les scènes S06 et S011 aux scènes S16 et S111 relevées par les capteurs 6 et 11.

L'algorithme détermine si un objet a été introduit dans le logement 8.

En d'autres termes, on reproduit la première étape 1, la deuxième étape 2 et l'étape 3 pour un deuxième capteur 11 de type temps de vol, et on détermine un déplacement de l'objet à l'intérieur du logement à partir des deux étapes de détermination respectivement associées aux deux capteurs.

Tant que le logement 8 est vide, les valeurs de distances des scènes S06 et S011 et des scènes S16 et S111 sont égales et on remonte à l'étape 30.

Après une durée t fixée par les moyens MT, par exemple toutes les secondes, les capteurs 6 et 11 mesurent chacun une scène tridimensionnelle jusqu'à ce que la présence d'un objet dans le logement 8 soit détectée. En d'autres termes, on mesure une scène à intervalle régulier de durée fixe.

Si un objet a été détecté dans le logement 8, on passe à l'étape 50. On suppose par la suite que l'objet 9 a été introduit dans le logement 8.

Les capteurs 6 et 11 relèvent une nouvelle scène respectivement S26 et S211 après que la durée t s'est écoulée à compter de la fin de l'étape 40.

Puis les moyens DEP déterminent si l'objet 9 a été retiré du logement 8 ou si un objet a été rajouté dans le logement 8 en comparant respectivement les scènes S16 et S111 aux scènes S26 et S211.

Si l'objet 9 n'a pas été retiré du logement 8 et aucun autre objet n'a été rajouté dans le logement 8, on passe à l'étape 8 décrite précédemment et, on poursuit à l'étape 30.

Si l'objet 9 a été retiré du logement 8 ou un objet a été rajouté dans le logement 8, on passe à l'étape 60.

Les capteurs 6 et 11 mesurent chacun respectivement une scène S36 et S311.

Les premiers moyens de calcul MCV déterminent la valeur du volume V2 occupé par le au moins un objet présent dans le logement 8.

Puis à l'étape 70. Les deuxièmes moyens de calcul MCT déterminent le taux d'occupation T1 en % du logement 8 en divisant la valeur V2 par la valeur V0 et en multipliant la valeur obtenue par 100.

Si la valeur de T1 est égale à 100%, c'est-à-dire les valeurs V0 et V2 sont égales, les moyens MDEP déduisent que le logement 8 est vide et on passe à l'étape 20.

Si la valeur de T1 est inférieure à 100%, le logement 8 n'est pas vide et on passe à l'étape 8.

La figure 6 illustre un autre exemple de mode de réalisation d'un capteur 6c de temps de vol identique au capteur 6 comprenant une lentille 100 de sorte que le champ du capteur 6c couvre l'ensemble de la scène F.

Avantageusement, seul le capteur 6c est nécessaire pour couvrir la scène F.

Les exemples de dispositifs de détection de présence et de mouvement décrits fonctionnent quelles que soient les formes, les couleurs et les matériaux des objets à détecter, tout en optimisant la consommation des dispositifs par une surveillance par intermittence.

Une ou plusieurs scènes tridimensionnelles sont relevées par chaque capteur par exemple toutes les 300 secondes. Cela réduit la consommation électrique des dispositifs de détection par rapport aux dispositifs de l'état de la technique qui fonctionnent continuellement.

Les dispositifs fonctionnent pour toute forme de logement à surveiller sans étape de réglage, en effet l'étape d'initialisation ne dépend pas de la forme du logement à surveiller.

Les capteurs ToF présentent une précision de mesure satisfaisante jusqu'à 2 m.

## Revendications

1. Procédé de détection de la présence ou de l'absence d'au moins un objet (9) dans un logement (8) comprenant :
a) une première étape durant laquelle un capteur (6) du type temps de vol mesure une première scène tridimensionnelle (S0) à l'intérieur du logement (8) dépourvu d'objet ;
b) une deuxième étape durant laquelle le capteur (6) du type de temps de vol mesure une deuxième scène (S1) à l'intérieur du logement (8) ;
c) une étape de comparaison durant laquelle on compare ladite première scène (S0) à la deuxième scène (S1); et
d) une étape de détermination de la présence ou de l'absence de l'objet (9) dans ledit logement (8), à partir du résultat de ladite comparaison.

2. Procédé selon la revendication 1, comportant une répétition de la deuxième étape à un intervalle régulier.

3. Procédé selon la revendication 2, dans lequel postérieurement à une détection de la présence dudit objet, on effectue une deuxième comparaison entre deux deuxièmes étapes successives et on détermine un retrait éventuel de l'objet à partir de la deuxième comparaison.

4. Procédé selon l'une des revendications 1 à 3, comportant en outre un calcul du volume occupé par ledit objet (9) dans ledit logement (8).

5. Procédé selon la revendication 4, comportant en outre un calcul d'un taux d'occupation (T) dudit logement (8).

6. Procédé selon la revendication 1, comprenant une reproduction des étapes a) à d) pour un deuxième capteur (11) du type temps de vol, et une détermination d'un déplacement de l'objet à l'intérieur du logement à partir des deux étapes de détermination d) respectivement associées aux deux capteurs.

7. Dispositif de détection de la présence ou de l'absence d'au moins un objet (9) dans un logement (8) comprenant :
un capteur (6) de type temps de vol configuré pour mesurer une première scène tridimensionnelle (S0) et une deuxième scène du logement (8) postérieurement à la première scène ;
des moyens de comparaison (MC) configurés pour comparer les deux scènes (S0, S1); et
des moyens de détermination (MD) configurés pour déterminer la présence ou l'absence de l'objet (9) dans ledit logement (8) à partir du résultat de la comparaison.

8. Dispositif selon la revendication 7, comportant en outre des moyens de temporisation (MT) configurés pour faire répéter la mesure d'une scène par ledit capteur à intervalle régulier.

9. Dispositif selon l'une des revendications 7 et 8, comportant en outre des premiers moyens de calcul (MCV) configurés pour calculer le volume occupé par ledit objet (9) dans ledit logement (8).

10. Dispositif selon la revendication 9, comportant des deuxièmes moyens de calcul (MCT) configurés pour calculer un taux d'occupation (T) dudit logement (8).

11. Dispositif selon la revendication 7, comprenant en outre un deuxième capteur (11) de type temps de vol configuré pour mesurer une scène tridimensionnelle, les moyens de détermination (MD) étant configurés pour déterminer deux informations de présence de l'objet à partir de scènes tridimensionnelles respectivement mesurées par les deux capteurs, et des moyens (MDEP) configurés pour déterminer un déplacement de l'objet à l'intérieur du logement à partir des deux informations de présence respectivement associées aux deux capteurs (6, 11).
